# EUROPÄISCHE PATENTSCHRIFT

(11) **EP 3 023 297 B1**
(45) Veröffentlichungstag und Bekanntmachung des Hinweises auf die Patenterteilung: **01.05.2019**
(21) Anmeldenummer: 15195044.1
(22) Anmeldetag: 17.11.2015
(51) Int. Cl.: B60N 2/75, B60N 2/64, B60N 2/02, B60N 2/90, B60N 2/868

(54) **FAHRZEUGSITZ MIT VERSCHWENKBARER RÜCKENLEHNE INKLUSIVE ARMLEHNE**
VEHICLE SEAT WITH A BACKREST THAT CAN BE PIVOTED INCLUDING ARMREST
SIEGE DE VEHICULE DOTE D'UN DOSSIER PIVOTANT COMPRENANT UN ACCOUDOIR

(30) Priorität: 21.11.2014 DE 102014117105; 24.04.2015 DE 102015106386
(43) Veröffentlichungstag der Anmeldung: 25.05.2016
(73) Patentinhaber: GRAMMER AG, 92224 Amberg (DE)
(72) Erfinder: Jahn, Thomas, 76694 Forst (DE)
(74) Vertreter: Hannke, Christian

(56) Entgegenhaltungen:
- EP-A2- 0 911 548
- EP-A2- 2 374 657
- DE-A1- 10 316 731
- DE-A1-102011 055 895
- DE-T5-112009 002 147
- GB-A- 2 390 415
- JP-U- H0 426 134
- US-A- 5 617 929
- US-A1- 2010 008 606

## Beschreibung

Die Erfindung betrifft eine Armlehnenanordnung für einen Sitz, insbesondere für einen Fahrzeugsitz, sowie einen Fahrzeugsitz mit einer solchen Armlehnenanordnung.

Die Armlehnenanordnung für einen Sitz, insbesondere für einen Fahrzeugsitz, umfasst eine Armlehne, die mittels einer Lagerachse mit einem Armlehnenträger schwenkbeweglich verbunden ist sowie zumindest ein Sitz- und/oder Abstützteil, wobei das Sitz- und/oder Abstützteil und die Armlehne zumindest über die Lagerachse mechanisch miteinander in Wirkverbindung stehen und das Sitz- und/oder Abstützteil um zumindest eine Schwenkachse schwenkbeweglich angeordnet ist, gemäß dem Oberbegriff des Patentanspruches 1.

Gattungsgemäße Armlehnenanordnungen sind bereits aus dem Stand der Technik wohl bekannt. Allerdings weisen diese bekannten Armlehnenanordnungen das Problem auf, dass ein Fahrer, der den Fahrersitz mit einer solch bereits bekannten Armlehnenanordnung bezogen hat, nicht stets in einer idealen Bedienposition zu in der Armlehnenanordnung verbauten Bedienelementen, beispielsweise einem Joystick, sich befindet. Der Fahrer weicht nämlich dann häufig von einer solchen idealen Bedienerposition ab, wenn sich dieser im Fahrzeugsitz verdreht. Ein Fahrer nämlich, der beispielsweise Anbaugeräte beobachten möchte, verdreht sich im Fahrzeugsitz und daher auch relativ zu den Bedienelementen. In einer solchen verdrehten Position kann es daher vorkommen, dass der Fahrer die Bedienelemente, welche in der Regel ortsfest in der Armlehne verbaut sind, mit seinem Arm nur mehr mit Mühe erreichen kann. Eine Verkürzung oder Verlängerung der Armlehne und damit eine Verkürzung oder Verlängerung des Abstands des Bedienelements der Armlehne zum Oberkörper des Fahrers wäre daher wünschenswert.

Gewünscht ist daher eine solche Armlehne, welche sich beispielsweise an eine Drehbewegung des Fahrers und/oder einer Dreh- und/oder Schwenkbewegung eines Sitz- und/oder Abstützteils nicht nur mitbewegt, sondern auch eine solche, welche sich in ihrer Länge der jeweiligen Drehposition des Fahrers anpassen kann. Fahrzeugsitze, welche eine solche Drehbewegung der Rückenlehne und/oder Kopfstütze um eine zur Haupterstreckungsebene der Sitzfläche senkrecht verlaufende Schwenkachse ermöglichen, sind beispielsweise in der Veröffentlichung DE 10 2011 055 895 A1 beschrieben.

Die EP 0911548 A2 zeigt eine Getriebeschaltbetätigung für Kraftfahrzeuge, mit einem vom Lenker des Kraftfahrzeuges zu bedienenden Schalthebel, die je nach gewählter Fahrstufe des Getriebes entsprechende Steuerimpulse zu einer Steuereinheit sendet, die über Schaltglieder das Einlegen der gewünschten Fahrstufe im Getriebe bewirkt, wobei die Getriebeschaltbetätigung von einer Gebrauchslage für das Anwählen der Fahrstufen in eine Ruhelage bei nicht benutztem Fahrzeug verlagerbar ist.

Eine zu lösende Aufgabe besteht daher darin, die oben genannten Probleme zu vermeiden und gleichzeitig eine Armlehnenanordnung für einen Sitz, insbesondere für einen Fahrzeugsitz, anzugeben, bei der ein Fahrer unabhängig von seiner Sitzposition auf einem Fahrzeugsitz stets einen optimalen Zugriff auf Bedienelemente der Armlehne hat.

Diese Aufgabe wird durch die Merkmale des Patentanspruches 1 gelöst.

Um nun eine Armlehnenanordnung anzugeben, durch die ein Fahrer unabhängig von seiner Sitz und/oder Verdrehposition relativ zum Fahrzeugsitz und/oder relativ zum Kabinenboden stets einen optimalen Zugriff auf Bedienelemente der Armlehne hat, macht die vorliegende Erfindung unter anderem von der Idee Gebrauch, eine Verstelleinrichtung zur Einstellung einer Relativposition zwischen einem Bedienelement der Armlehne und dem Sitz- und/oder Abstützteil anzuordnen, wobei die Verstelleinrichtung zur Einstellung der Relativposition des Bedienelements an der Armlehne derart gelagert ist, dass das Bedienelement der Armlehne mit einer Verlagerungsbewegung des Sitz- und/oder Abstützteils um die zumindest eine Schwenkachse zumindest teilweise mitgeführt und/oder dass das Sitz- und/oder Abstützteil mit einer Verlagerungsbewegung des Bedienelements zumindest teilweise mitgeführt wird. Dabei sind die Schwenkachse und die Lagerachse zwei unterschiedliche, vorzugsweise auch voneinander unabhängige Achsen. Diese könnten jedoch auch zumindest teilweise parallel zueinander verlaufen oder zumindest stellenweise miteinander überlappen.

Insbesondere kann mittels der hier beschriebenen Verstelleinrichtung eine Längenänderung der gesamten Armlehne realisiert sein. Insofern ist die Relativposition zumindest teilweise über eine Länge der Armlehne definiert. Die Länge der Armlehne ist dabei dasjenige Längenmaß, ausgehend von der Lagerachse in Richtung der Haupterstreckungsrichtung der Armlehne bis zu deren Ende.

Grundsätzlich gilt daher, dass mit dem Begriff "mitführen" jedwede Anpassung einer Relativposition, also eine Längenänderung, der Armlehne bezeichnet ist. Jedenfalls ist das jeweils mitgeführte Element vorzugsweise nur aufgrund mechanischer und/oder elektrischer und/oder pneumatischer Verstellkräfte bewegt. Die Veränderung der Relativposition des nach- und/oder mitgeführten Elements ist daher vorzugsweise nicht durch den Benutzer selbst verursacht. Gemäß zumindest einer Ausführungsform ist die Verstelleinrichtung innerhalb eines Gehäuses der Armlehne angeordnet. Dies gewährleistet, dass die Verstelleinrichtung besonders platzsparend und kompakt in der Armlehne untergebracht ist.

Gemäß zumindest einer Ausführungsform ist das Gehäuse mit zumindest zwei, zumindest teilweise ineinander verschiebbaren, Schiebeelementen gebildet, wobei an demjenigen Schiebeelement, welches, insbesondere stets, weiter weg von der Lagerachse angeordnet ist, das Bedienelement der Armlehne angebracht ist.

Gemäß zumindest einer Ausführungsform ist durch ein Hinein- oder Hinausschieben desjenigen Schiebeelements, an dem das Bedienelement angebracht ist, eine Länge der Armlehne veränderbar.

Mit anderen Worten kann das Gehäuse durch diese entlang der Haupterstreckungsrichtung der Armlehne ineinander verschiebbaren Schiebeelemente gebildet sein. Denn es wurde erkannt, dass in Abhängigkeit der Drehstellung des Oberkörpers des Fahrers sich eine effektive Reichweite des Fahrers zur Bedienung der Bedieneinheit verändert. Verkürzt sich nämlich beispielsweise ein Weg bis zum Bedienelement hin, ist der Fahrer nicht mehr gezwungen sich ungewohnt nach dem Bedienelement zu strecken. Die beiden Schiebeelemente schieben sich einfach um ein vorgebbares Längenmaß ineinander, sodass das Bedienelement näher an die Lagerachse verschoben wird. Das Bedienelement ist dann viel einfacher zu erreichen, da sich der Fahrer nicht mehr nach diesem Dehnen muss.

Mittels des durch die Verstelleinrichtung realisierten Nachführmechanismus kann daher in besonders einfacher Art und Weise sichergestellt werden, dass der Fahrer unabhängig von der Verschwenkposition des Sitz- und/oder Abstützteils und der Armlehne um die Schwenkachse immer leichten Zugriff auf die Bedienelemente der Armlehne hat. Insbesondere kann so erreicht sein, dass eine Relativposition des Bedienelements zu dem Sitz- und/oder Abstützteil abhängig von der Schwenkbewegung und/oder -richtung des Sitz- und/oder Abstützteils um die zumindest eine Schwenkachse verändert wird.

Dazu kann die Armlehne über die Lagerachse mechanisch fest mit dem Sitz- und/oder Abstützteil verbunden sein. Trotzdem kann die Armlehne um die Lagerachse hoch- und runterklappbar, jedoch stets längenveränderbar sein.

Gemäß zumindest einer Ausführungsform ist unabhängig oder abhängig von einer Längenänderung der Armlehne, die Armlehne um die Lagerachse, insbesondere stets, hoch- und runterklappbar.

Gemäß zumindest einer Ausführungsform ist die Armlehne nur innerhalb eines Teilschwenkbereichs des Sitz- und/oder Abstützteils mit diesem mitverschwenkbar und/oder längenveränderbar, wobei sich eine Länge der Armlehne bis zu einer vorgebbaren Grenzverschwenkung der Armlehne und/oder des Sitz- und/oder Abstützteils um die Schwenkachse mitverändert, jedoch bei Überschreiten einer solchen Grenzverschwenkung an einer Maximal- und/oder Minimallänge ankommt, während das Sitz- und/oder Abstützteil noch weiter verschwenkbar ist.

Gemäß zumindest einer Ausführungsform ist die Grenzverschwenkung an dem Sitz- und/oder Abstützteil und/oder der Armlehne mittels eines mechanischen und/oder pneumatischen und/oder elektrischen Mechanismus durch die Verstelleinrichtung gesteuert.

Gemäß zumindest einer Ausführungsform umfasst die Armlehnenanordnung und/oder die Verstelleinrichtung eine Sensorik und/oder Steuerung, welche eine Verschwenkung des Sitz- und/oder Abstützteils und/oder der Armlehne erfasst und bei Erreichen der Grenzverschwenkung die Verstelleinrichtung oder deren Elemente derart ansteuert, dass diese die Armlehne ab diesem Grenzwert in ihrer Länge fixiert.

Gemäß zumindest einer Ausführungsform ist die Verstelleinrichtung nicht nur dazu eingerichtet und dafür vorgesehen eine Längenänderung der Armlehne durchzuführen, sondern dass über die Verstelleinrichtung die gesamte Armlehne, insbesondere abhängig von der Verschwenkung des Sitz- und/oder Abstützteils, um die Lagerachse des Armlehnenträgers hoch- und runterklappbar ist.

Gemäß zumindest einer Ausführungsform umfasst die Armlehnenanordnung für einen Sitz, insbesondere für einen Fahrzeugsitz, eine Armlehne, die mittels einer Lagerachse mit einem Armlehnenträger schwenkbeweglich verbunden ist. Weiter umfasst die Armlehnenanordnung zumindest ein Sitz- und/oder Abstützteil, wobei das Sitz- und/oder Abstützteil und die Armlehne zumindest über die Lagerachse mechanisch miteinander in Wirkverbindung stehen und das Sitz- und/oder Abstützteil um zumindest eine Schwenkachse schwenkbeweglich angeordnet ist. Handelt es sich bei dem Sitz- und/oder Abstützteil um eine Rückenlehne des Sitzes, so kann die Schwenkachse parallel zu einer Haupterstreckungsebene der Rückenlehne verlaufen, sodass die Schwenkachse gleichzeitig beispielsweise eine Symmetrieachse der Rückenlehne ist, um welche sich rotatorisch die Rückenlehne verdreht.

Zudem umfasst die Armlehnenanordnung eine Verstelleinrichtung zur Einstellung einer Relativposition zwischen einem Bedienelement der Armlehne und dem Sitz- und/oder Abstützteil, wobei die Verstelleinrichtung zur Einstellung einer Relativposition des Bedienelements an der Armlehne derart gelagert ist, dass das Bedienelement mit einer Verlagerungsbewegung des Sitz- und/oder Abstützteils um die zumindest eine Schwenkachse zumindest teilweise mitgeführt und/oder dass das Sitz- und/oder Abstützteil mit einer Verlagerungsbewegung des Bedienelements zumindest teilweise mitgeführt wird.

Insbesondere kann die Position der Armlehne, insbesondere die Position des Bedienelements, relativ zum Sitz- und/oder Abstützteil auch abhängig von einer Sitzverstellung des Sitz- und/oder Abstützteils sein. Ein Verstellmechanismus des Sitz- und/oder Abstützteils kann dann in mechanischer, pneumatischer und/oder elektrischer Wirkverbindung mit der hier beschriebenen Verstelleinrichtung für das Bedienelement stehen.

Auch ist denkbar, dass die Verstelleinrichtung aktiv in Abhängigkeit der Position des Fahrers auf dem Sitz- und/oder Abstützteil eine Längenänderung der Armlehne durchführt, ohne dass das Sitz- und/oder Abstützteil zunächst bewegt werden müsste. Dies kann durch eine geeignete Sensorik und/oder Steuerung realisiert sein, welche eine Sitzposition des Fahrers auf dem Sitz detektiert und in Abhängigkeit davon die Verstelleinrichtung ansteuert, welche wiederrum die Armlehne nachsteuert und das Bedienelement herein oder herausfährt.

Gemäß zumindest einer Ausführungsform ist eine Kopplung der Bewegung des Sitz- und/oder Abstützteils mit der Armlehne, insbesondere des Bedienelements, zumindest teilweise bewegungssynchron oder aber auch teilweise oder ganz nicht-synchron ausgebildet, wobei für den Fall, dass die Kopplung zwischen den beiden Elementen nicht-synchron ausgebildet ist, das Bedienelement zwar mit der Bewegung des Sitz- und/oder Abstützteils mitgeführt, das heißt hinaus oder herausschiebbar, hoch- oder runterklappbar ist, diese Bewegung jedoch, zumindest teilweise, unabhängig von einem Winkelgrad der Verschwenkung des Sitz- und/oder Abstützteils ist, wobei bei einer synchronen Kopplung der Elemente die Bewegungen abhängig voneinander gekoppelt sind.

Insofern kann eine Kopplung der Bewegung des Sitz- und/oder Abstützteils mit einer Armlehne, insbesondere des Bedienelements, zumindest teilweise bewegungssynchron oder aber auch nicht-synchron ausgebildet sein. Ist die Kopplung zwischen den beiden Elementen nicht-synchron ausgebildet, ist denkbar, dass das Bedienelement zwar mit der Bewegung des Sitz- und/oder Abstützteils mitgeführt, das heißt hinaus oder herausgeschoben, hoch- oder runtergeklappt wird, diese Kopplung jedoch nicht konstant/proportional und damit sich in Abhängigkeit von dem Winkelgrad der Verschwenkung des Sitz- und/oder Abstützteils vorgebbar sich verändert.

Mit anderen Worten kann die Armlehne, insbesondere das Bedienelement, in Abhängigkeit von der Bewegung des Fahrers eine beliebige, jedoch stets vorgebbare Bahn während der Verdrehung des Sitz- und/oder Abstützteils beschreiben.
Gemäß zumindest einer Ausführungsform ist die Verstelleinrichtung mit einer Drehspindel sowie mit einem an einem ersten Ende der Drehspindel angeordneten Spindelmotor zum motorbetätigten Drehen der Drehspindel um ihre Längsachse gebildet, wobei die Drehspindel mit ihrem zweiten Ende mit einer Armlehnenkopplung der Armlehne verbunden ist, wobei der Spindelmotor an dem Armlehnenträger abgestützt ist, und wobei zur Einstellung der Relativposition des Bedienelements relativ zum Sitz- und/oder Abstützteil, die Drehspindel, insbesondere über eine Drehbewegung des Spindelmotors über eine Spindelachse, gegen die Armlehnenkopplung und/oder den Armlehnenträger bewegbar ist.
Wird nun die Drehspindel durch den Spindelmotor drehbeweglich innerhalb der Armlehne angetrieben, bewegt sich das zweite Ende immer weiter von dem Spindelmotor und dem Armlehnenträger weg. Dabei kann das zweite Ende mit dem ersten Schiebeelement der Armlehne verbunden sein, wobei das erste Ende mit dem zweiten Schiebeelement der Armlehne verbunden ist. Auf dem ersten Schiebeelement ist dann das Bedienelement beispielsweise ortsfest positioniert. Eines der beiden Schiebeelemente ist innerhalb des anderen schiebebeweglich gelagert, wobei das jeweils andere über die Lagerachse mit dem Sitz- und/oder Abstützteil mechanisch verbunden ist. Wird nun das zweite Ende der Drehspindel herausgedreht, verlängert sich die absolute Länge der Armlehne, da das erste Schiebeelement ebenso herausgeschoben wird, da die Armlehnenkopplung mechanisch fest nur mit dem ersten Schiebeelement verbaut ist. Das Bedienelement vergrößert somit seine Entfernung von dem Sitz- und/oder Abstützteil. Für die umgekehrte Bewegung der Drehspindel gilt daher das Entsprechende.

Auch ist denkbar, dass nicht nur eine Längenveränderung möglich ist, sondern dass über die Verstelleinrichtung die gesamte Armlehne, abhängig von der Verschwenkung des Sitz- und/oder Abstützteils und/oder der Armlehne um die Lagerachse der Armlehnenstütze, Hoch- und Runterklappbar ist.

Gemäß zumindest einer Ausführungsform ist das erste Ende der Drehspindel in einer Antriebsmutter zum Antreiben der Drehspindel in der Längsrichtung gelagert, wobei die Antriebsmutter rotatorisch von dem Spindelmotor angetrieben wird oder die Antriebsmutter ist ortsfest gelagert, wobei darin die Drehspindel von dem Spindelmotor um die Spindelachse gedreht wird. Die Antriebsmutter kann daher nicht nur zum Fixieren des ersten Endes der Drehspindel dienen, sondern sie kann auch als Eingriffs- und Antriebselement für die Drehspindel selbst ausgebildet sein.

Gemäß zumindest einer Ausführungsform ist die Verstelleinrichtung mit zumindest einem, insbesondere pneumatischen, Druckzylinder sowie mit einem in Längsrichtung innerhalb des Druckzylinder beweglichen Aktors gebildet, wobei der Druckzylinder innerhalb des Gehäuses der Armlehne am Armlehnenträger befestigt ist und ein freies Ende des Aktors mit einer Armlehnenkopplung der Armlehne verbunden ist, wobei zur Einstellung der Relativposition des Bedienelements relativ zu dem Sitz- und/oder Abstützteil mittels einer steuerbaren Ventileinrichtung und über eine Fluidzu- und/oder Abfuhr im Druckzylinder der Aktor aus dem Druckzylinder heraus- und/oder hereinfahrbar ist.

Dies stellt daher einen alternativen oder aber auch einen zusätzlichen Verstellmechanismus zu der oben dargestellten Spindelverstellung dar. Auch mit dem pneumatischen Mechanismus kann daher besonders einfach eine Längenänderung der Armlehne an eine Bewegung des Sitz- und/oder Abstützteil erfolgen. Unabhängig von der konkreten Ausgestaltung der Verstelleinrichtung kann jedoch die Armlehne stets mit einem ersten und einem zweiten Schiebeelement ausgebildet sein.

Gemäß zumindest einer Ausführungsform ist die Verstelleinrichtung mit zumindest einem Bowdenzugelement gebildet, wobei ein erstes Ende des Bowdenzugelements mit einer Armlehnenkopplung und ein zweites Ende des Bowdenzugelements mit einem an dem Armlehnenträger abgestützten Führelement mechanisch verbunden ist, wobei zur Einstellung der Relativposition des Bedienelements relativ zu dem Sitz- und/oder Abstützteil das Bowdenzugelement durch Zug- und/oder Druckbeaufschlagung bewegbar ist. Im Gegensatz zu den beiden oben vorgestellten Verstellmechanismen handelt es sich bei diesem um einen vorzugsweise rein mechanischen Verstellmechanismus, der besonders wenig störanfällig und kostengünstig ist. Insbesondere kann es sich nämlich bei dem Bowdenzugelement um ein Draht oder Plastikdrahtelement handeln, sodass eine solche Verstelleinrichtung nach dem Grundkonzept einer Fahrradbackenbremse aufgebaut sein kann.

Gemäß zumindest in der Ausführungsform umfasst zur Umlenkung des Bowdenzugelements die Verstelleinrichtung zumindest ein Umlenkelement, wobei das Bowdenzugelement um das Umlenkelement richtungsumgelenkt ist. Mit anderen Worten kann eine Betätigungskraft, beispielsweise ausgeübt durch ein Aktorelement über ein derart beschriebenes Umlenkelement auf das erste Ende des Bowdenzugelements, welches mit der Armlehnenkopplung verbunden ist, übertragen werden. Wird nun beispielsweise ein Weg zwischen einem derartigen Aktor und dem ersten Ende des Bowdenzugelements verkürzt, so ist denkbar, dass sich die Armlehne um die Lagerachse dreht und sich beispielsweise nach oben oder unten verschwenkt und/oder dass sich die Länge der Armlehne verkürzt. Verlängert sich ein derartiger Weg, ist denkbar, dass sich diese Armlehne um die Lagerachse herunterdreht und damit absenkt und/oder sich die Länge der Armlehne verlängert.

Mit anderen Worten macht ein hier beschriebener Bowdenzugmechanismus wie ebenso die dazu alternativen oder zusätzlichen Verstellmechanismen grundsätzlich daher von der Idee Gebrauch, dass ausgehend von der Verstelleinrichtung und vorzugsweise nur durch diese, ein Drehmoment innerhalb der Armlehne derart erzeugt wird, dass sich die Relativposition des Bedienelements verändert.

Gemäß zumindest einer Ausführungsform umfasst zur Umlenkung und/oder Rückstellung des Bowdenzugelements die Verstelleinrichtung zumindest ein Rückstellelement, wobei das Rückstellelement dazu eingerichtet und dazu vorgesehen ist, die Armlehne selbstarretierend in eine Nullposition zurückzustellen.

Ist beispielsweise das Sitz- und/oder Stützteil aus einer Nullposition heraus verdreht, so wird, wie obig bereits ausgeführt, die Armlehne mit dem Sitz- und/oder Stützteil mitverdreht. Mittels des hier beschriebenen Rückstellelements ist es jedoch ermöglicht, dass, ohne dass beispielsweise der Fahrer externe Kraft auf die Armlehne ausüben müsste, sich sowohl die Armlehne als auch das Sitz- und/oder Stützelement wieder in seine nicht verdrehte, d. h. Nullposition oder Nulllänge, das heißt Ausgangslänge, von selbst zurückversetzt wird. Eine vom Fahrer beispielsweise sehr umständliche, händische Zurückstellung ist daher vorteilhafterweise eingespart.

Gemäß zumindest einer Ausführungsform umfasst das Rückstellelement zumindest eine Rückstellfeder.

Beispielsweise wird die Rückstellfeder während einer Verdrehung um die Schwenkachse zusammengepresst. Der Fahrer spürt daher während einer Verdrehung des Sitz- und/oder Stützteils und daher auch bei einer entsprechenden Verdrehung der Armlehne stets einen durch die Rückstellfeder ausgeübten Gegendruck. Sobald der Fahrer wieder in die Nullposition sich zurückverdrehen möchte, gibt er dem Gegendruck mit dem er die verdrehte Position aufrecht erhält nach, sodass die Rückstellfeder die gesamte Armlehnenanordung oder aber beispielsweise nur die Armlehne selbst wieder in deren Nullposition und/oder Nulllänge zurückdrängt.

Gemäß zumindest einer Ausführungsform umfasst das Rückstellelement zumindest eine Führungskulisse entlang der die Armlehne führbar ist. Insbesondere kann dazu das Rückstellelement die hier beschriebene Rückstellfeder und ein Kulissenelement umfassen, welches eine Führungskulisse umfasst, innerhalb derer beispielsweise ein Führungsnocken der Armlehne führbar ist, sodass durch eine Führung dieses Führungsnockens ebenso die Armlehne entlang der Führungskulisse schwenkbeweglich geführt werden kann.

Gemäß zumindest einer Ausführungsform ist das Sitz- und/oder Abstützteil eine Rückenlehne oder eine Sitzfläche oder eine Kopfstütze.

Insofern ist denkbar, dass die hier beschriebene Armlehnenanordnung in einem Sitz, insbesondere in einem Fahrzeugsitz, verbaut sein kann. Beispielsweise handelt es sich bei dem Sitz um einen Fahrzeugsitz, umfassend sowohl eine Rückenlehne als auch eine Sitzfläche, wobei beispielsweise die Rückenlehne um zumindest eine Schwenkachse schwenkbeweglich zur Sitzfläche angeordnet ist. Beispielsweise kann eine Neigung der Rückenlehne zur Sitzfläche um eine derartige Schwenkachse eingestellt werden. Ebenso ist jedoch denkbar, dass die Sitzfläche um eine zu einer derartigen Neigungsverschwenkungsachse parallel verlaufende, jedoch zu dieser Achse parallel verschobene Achse, schwenkbar sein kann. Beispielsweise kann eine derartige verschobene Achse zwar parallel zu einer Neigungsverschwenkungsachse ausgebildet sein, jedoch beispielsweise mittig innerhalb der Sitzfläche verlaufen, sodass ein derartiger Sitz eine Verschwenkungsachse aufweist, die dazu führt, dass die Sitzfläche nach vorne und nach hinten oder auch zur Seite verschwenkbar ist. Eine Längenveränderung der Armlehne kann daher nicht nur von einer einzigen Verschwenkungsachse, beispielsweise zwischen einer derartigen Rücklehne und einer Sitzfläche abhängig gemacht werden, sondern eine Längenänderung der Armlehne und daher eine Positionierung des Bedienelements relativ zum Sitz- und/oder Abstützteil kann auch von zu dieser Achse parallel und/oder senkrecht verlaufenden, weiteren Achsen erfolgen.

Im Folgenden wird die hier beschriebene Anordnung sowie der hier beschriebene Fahrzeugsitz anhand von Ausführungsbeispielen und den dazugehörigen Figuren näher erläutert.

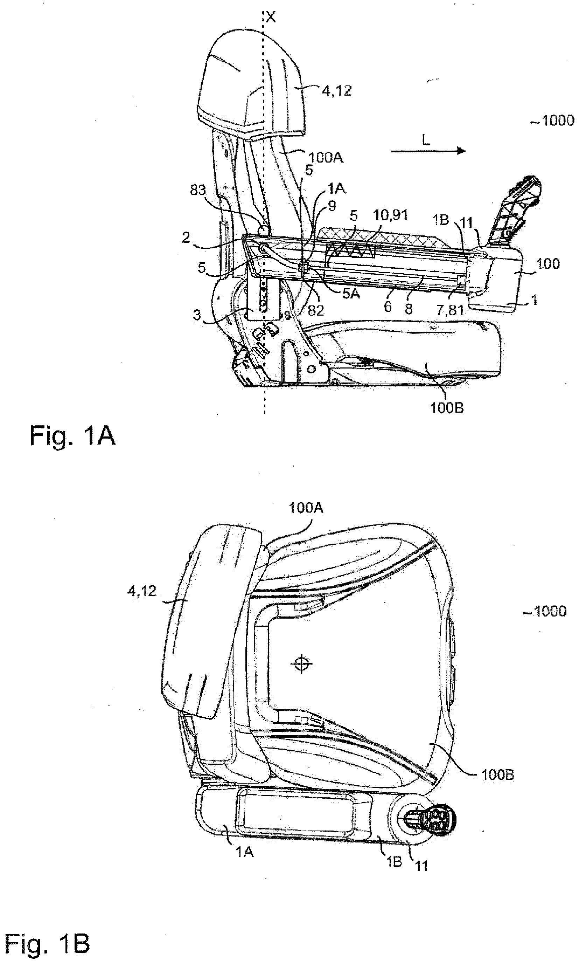

Die Figuren 1A - 5E zeigen in verschiedenen perspektivischen Ansichten verschiedene Ausführungsbeispiele der hier beschriebenen Anordnung sowie des hier beschriebenen Fahrzeugsitzes.

In den Ausführungsbeispielen und den Figuren sind gleiche oder gleich wirkende Bestandteile jeweils mit den gleichen Bezugszeichen versehen. Die hier dargestellten Elemente sind nicht als maßstabsgerecht anzusehen, vielmehr können einzelne Elemente zum besseren Verständnis übertrieben groß dargestellt sein.

In der Figur 1A ist in einer seitlichen Darstellung ein erstes Ausführungsbeispiel eines hier beschriebenen Fahrzeugsitzes 1000 umfassend ein erstes Ausführungsbeispiel einer hier beschriebenen Armlehnenanordnung 100 beschrieben. Insbesondere zeigt nämlich die in der Figur 1A dargestellte Armlehnenanordnung 100 schematisch eine Armlehne 1, die mittels einer Lagerachse 2 mit einem Armlehnenträger 3, schwenk- und/oder drehbeweglich verbunden ist. Zudem zeigt die Armlehnenanordnung 100 somit ein Sitz- und/oder Abstützteil 4 in Form einer Kopfstütze 12 des hier beschriebenen Fahrzeugsitzes 1000. Darüber hinaus ist die Armlehnenanordnung 100 mechanisch fest über ihren Armlehnenträger 3 mit einer Sitzfläche 100B verbunden. Wird nun eine Rückenlehne 100A und/oder die Sitzfläche 100B um eine zur Haupterstreckungsebene der Sitzfläche 100B senkrecht verlaufende Schwenkachse X seitlich verschwenkt, bleibt daher die Armlehne 1 ortsfest an der Sitzfläche 100B positioniert, da diese mit der Sitzfläche 100B mechanisch fest verbunden ist und die Sitzfläche 100B sich zumindest um die Schwenkachse X nicht mitverdreht. Insbesondere ist nämlich die hier beschriebene Armlehne 1 mittels eines Führungsbolzens an dem Armlehnenträger 3 hoch und runter klappbar befestigt. Ebenso ist über den Führungsbolzen die Armlehne 1 an dem Armlehnenträger 3 höhenverstellbar, wie dies aus der Seitenansicht der Figur 1A besonders eingängig durch die dort gezeigte nach unten geradlinig verlaufende Führungskurve innerhalb des Armlehnenträgers 3 gezeigt ist.

Zudem geht aus der schematischen Schnittdarstellung der dort gezeigten Armlehne 1 hervor, dass diese Armlehne 1 eine Verstelleinrichtung 5 umfasst. Mittels der dort gezeigten Verstelleinrichtung 5 kann nämlich eine Relativposition eines Bedienelements 11 der Armlehne 1 eingestellt werden. Insbesondere bildet das Bedienelement 11 in dem vorliegenden Ausführungsbeispiel ein freies Ende der gesamten Armlehne 1. Das Bedienelement 11 umfasst daher sowohl den Joystick als auch dessen Fixiergehäuseteil. Insbesondere kann es sich bei der Einstellung der Relativposition des Bedienelements 11 relativ zu dem Sitz- und/oder Abstützteil 4 um eine Einstellung einer absoluten Länge der Armlehne 1 handeln. Mit anderen Worten, verdreht sich zwar die Armlehne 1 nicht mit der Kopfstütze 12 mit, trotzdem ändert sich die Länge der Armlehne 1 in Abhängigkeit des Verdrehwinkels der Kopfstütze 12 um die Schwenkachse X.

Die absolute Länge der Armlehne 1 ist daher die Länge, welche von optisch außen sichtbar und von außen beispielsweise mittels eines Maßbandes abmessbar ist. Dazu weißt die Armlehne 1, gemäß der Figur 1A zwei Schiebeelemente 1A und 1B auf, wobei auf dem Schiebeelement 1B das Bedienelement 11 montiert ist und das Schiebeelement 1A mechanisch fest mit der Lagerachse 2 verbunden ist. Beide Schiebeelemente 1A und 1B können in longitudinaler Richtung, also in Längsrichtung L, zueinander und/oder ineinander verschoben werden und bilden zumindest teilweise ein Gehäuse 6 der Armlehnenanordnung 100 aus. Mittels einer Verschiebung des Schiebeelements 1B in longitudinaler Richtung L ist daher ein Abstand (also eine Relativposition) des Bedienelements 11 zu dem Sitz- und/oder Abstützteil 4, das heißt der Kopfstütze 12, besonders einfach einstellbar. Zur Einstellung einer Relativposition des Bedienelements 11 in Bezug auf das Sitz- und/oder Abstützteil 4 ist daher die Verstelleinrichtung 5 teilweise in einem Gehäuse 6 der Armlehne 1 gelagert.

Insbesondere ist nämlich erkennbar, dass die Verstelleinrichtung 5 mit einem Bowdenzugelement 8 gebildet ist. Das zweite Ende 82 des Bowdenzugelements 8 ist zunächst an dem ersten Schiebeelement 1A fixiert und reicht durch dieses, beispielsweise durch ein Führungselement 5A in Richtung des Bedienelements 11 hindurch und ist vollständig innerhalb der Armlehne 1 geführt. Mit anderen Worten ist ein erstes Ende 81 des Bowdenzugelements 8 mit einer Armlehnenkopplung 7 in dem zweiten Schiebeelement 1B verbunden. Die Armlehnenkopplung 7 ist daher ein Element des zweiten Schiebelements 1B der Armlehne 1 zur Einstellung der Relativposition des Bedienelements 11 relativ zum Sitz- und/oder Abstützteil 4, das heißt der Kopfstütze 12. Zur Längeneinstellung der Armlehne 1 umfasst die Verstelleinrichtung 5 nicht nur das Bowdenzugelement 8 in Form eines Drahtes oder eines Kunststoffkabels, sondern zusätzlich weitere Elemente mittels der durch Zug- und/oder Druckkräfte eine Schwenkbewegung der Kopfstütze 12 um die Schwenkachse X auf das innerhalb der Armlehne 1 verlaufende Bowdenzugelement 8 mechanisch übertragen werden kann. Dazu kann das Bowdenzugelement 8 bis zur Kopfstütze 12 verlängert sein und kann auch zumindest teilweise ausgehend von dem zweiten Schiebeelement 1B bis hinauf zur Kopfstütze 12 reichen und dort verankert sein.

Denkbar ist in diesem Zusammenhang, dass das in der Figur 1A gezeigte Bowdenzugelement 8 ständig unter Zugspannung steht und daher beständig versucht, dass Bedienelement 11 in Richtung des Sitz- und/oder Abstützteils 4 zu ziehen, wohingegen als Gegenkraft das Bedienelement 11 von einem in der Armlehne 1 integrierten Rückstellelement 10, beispielsweise in Form einer Rückstellfeder 91 in genau die entgegengesetzte Richtung versucht wird gedrückt zu werden, d. h. in eine Richtung versucht wird gedrückt zu werden, welche von dem Sitz- und/oder Abstützteil 4 wegführt.

Es kann somit ein Kräftegleichgewicht hergestellt sein, sodass bei einer konstanten Neigung des Sitz- oder Abstützteils 4 auf das Bedienelement 11, insbesondere auch die Länge der Armlehne 1, gleich bleibt. Wird nun das Sitz- und/oder Abstützteil 4, das heißt die Kopfstütze 12, um beispielsweise die Schwenkachse X zur Seite in Richtung der Armlehne 1 verdreht, mithin also verschwenkt, ist denkbar, dass das Bowdenzugelement 8 angezogen wird und somit eine absolute Länge der Armlehne 1 verkürzt wird. Bei einer umgekehrten Drehbewegung der Kopfstütze 12 in Richtung beispielsweise weg von der Armlehne 1, kann das Bowdenzugelement 8 in seiner Vorspannung gelockert werden, sodass die Rückstellfeder 91 das Bedienelement 11 von dem Sitz- und/oder Abstützteil 4 wegdrängt. Insofern würde dann eine Länge der Armlehne 1 vergrößert werden.

Zur Umlenkung umfasst nämlich die hier beschriebene Verstelleinrichtung 5, umfassend das Bowdenzugelement 8, zumindest ein Umlenkelement 83 (gestrichelt gezeichnet) mittels dem Zug- und Druckkräfte auf das Bowdenzugelement 8 übertragen werden können.

Besonders aus der Seitenansicht gemäß der Figur 1A ist erkennbar, dass das Bedienelement 11 in einer maximalen Ausfahrposition angeordnet ist, da die gezeigte Kopfstütze 12, welche in dem Ausführungsbeispiel gemäß der Figur 1A das beschriebene Sitz- und/oder Abstützteil 4 ist, in Richtung weg von der Armlehne 1 gedreht ist.

Das Gegenteil ist in der Draufsicht gemäß der Figur 1B gezeigt. Dort ist zwar der gleiche Fahrzeugsitz 1000 gezeigt, jedoch ist die Kopfstütze 12 zu der Armlehne 1 hingewandt. Dies bedingt gezwungenermaßen, dass das Bedienelement 11 in Richtung des Sitz- und/oder Abstützteils 4, d. h. also der Kopfstütze 12, hereingefahren wird. Die Armlehne 1 weißt daher eine minimale Länge auf.

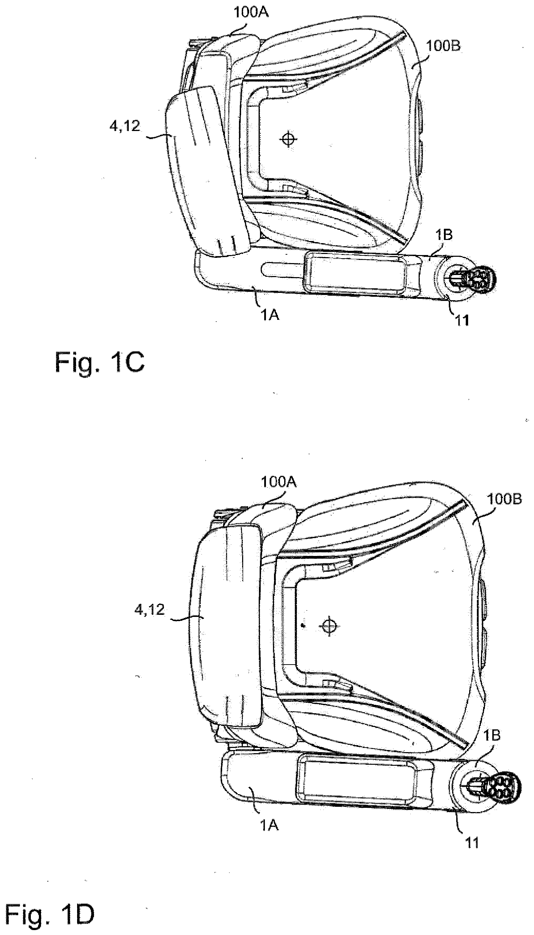

In der Figur 1C ist eine Verschwenkung entsprechend beispielsweise der Figur 1A mit einer zusätzlichen Seitenverschiebung der Kopfstütze 12 gezeigt, sodass aus der Figur 1C besonders eingängig hervorgeht, dass dort eben, wie obig bereits erwähnt, die Armlehne 1 eine maximale Länge aufweist und das Bedienelement 11 daher in dessen Relativposition möglichst weit weg von dem Sitz- und/oder Abstützteil 4 angeordnet ist.

Ist nun, wie in der Figur 1D dargestellt, die Kopfstütze 12, d. h. das Sitz- und/oder Abstützteil 4, in einer Nullposition gelagert, so weist auch die Länge der Armlehne 1 eine Mittenstellung auf. Diese Mittenstellung ist daher eine Stellung, beispielsweise ein mathematischer Mittelwert zwischen einer Minimallänge der Armlehne 1 und einer Maximallänge der Armlehne 1.

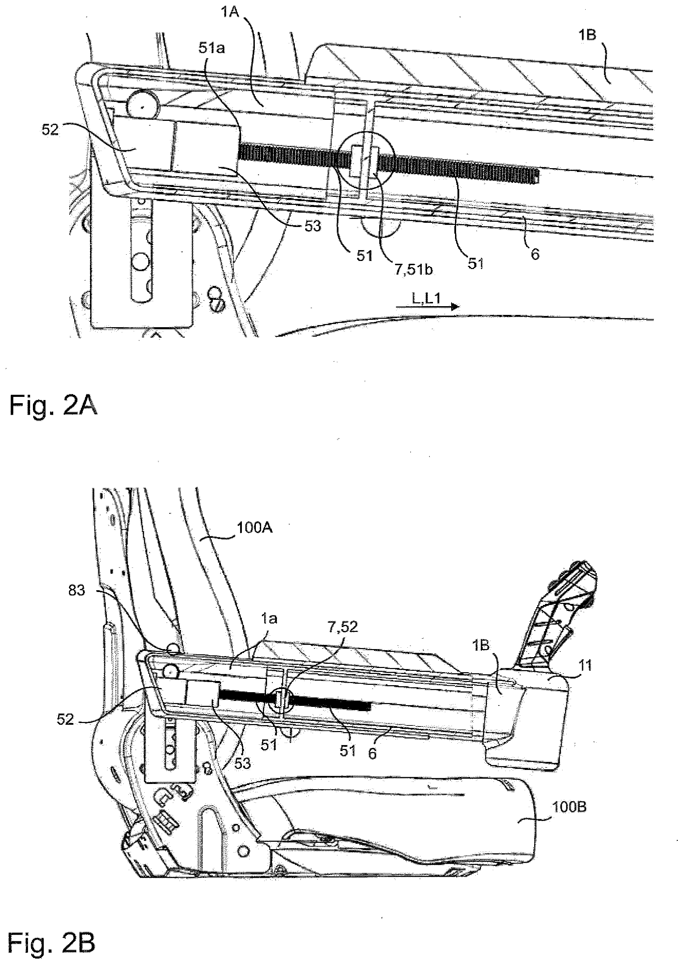

In den Figuren 2A - 2B ist in schematischen Seitenansichten ein weiteres Ausführungsbeispiel einer hier beschriebenen Verstelleinrichtung 5 gezeigt, wobei im Unterschied zu dem Ausführungsbeispiel gemäß den Figuren 1A - 1D die Verstelleinrichtung 5 nicht durch das dort beschriebene Bowdenzugelement 8 gebildet ist, sondern stattdessen ist die Verstelleinrichtung 5 mit einer Drehspindel 51 sowie mit einem an einem ersten Ende 51a der Drehspindel 51 angeordneten Spindelmotor 52 zum motorbetätigten Drehen der Drehspindel 51 um Ihre Längsachse L gebildet. Dabei ist die Drehspindel 51 mit ihrem zweiten Ende 51b mit einer Armlehnenkopplung 7 der Armlehne 1 verbunden, wobei der Spindelmotor 52 an dem Armlehnenträger 3 abgestützt ist und wobei zur Einstellung der Relativposition des Bedienelements 11 relativ zu dem Sitz- und/oder Abstützteil 4, d. h. der Kopfstütze 12, die Drehspindel 51, insbesondere über eine Drehbewegung des Spindelmotors 52, gegen die Armlehnenkopplung 7 und/oder den Armlehnenträger 3 bewegbar ist.

Mit anderen Worten wird daher das Bowdenzugelement 8 unter anderem ersetzt durch eine Drehspindel 51, welche in ihrer effektiven Länge und/oder Lage innerhalb des Gehäuses 6 einstellbar ist. Die Drehspindel 51 ist nämlich mit ihrem ersten Ende 51a in einer Antriebsmutter 53 zum Antreiben der Drehspindel 51 in der Längsrichtung L gelagert, wobei die Antriebsmutter 53 rotatorisch von dem Spindelmotor 52 angetrieben wird. Alternativ ist jedoch auch denkbar, dass die Antriebsmutter 53 fixiert ist und diese lediglich zum Führen der Drehspindel 51 dient. Weiter ist die Drehspindel 51 in dem schiebebeweglichen zweiten Schiebeelements 1B in einer Lagerung drehbeweglich gelagert. Beide Teile des Gehäuses 6 der Armlehne 1 sind daher nicht nur wie bereits in den Ausführungsbeispielen gemäß den Figuren 1A - 1D in Ihrer Längsrichtung L zueinander verschiebbar, sondern die Drehspindel 51 ist in der Armlehnenkopplung 7 auch geführt.

Grundsätzlich gilt nämlich unabhängig von der konkreten Ausgestaltung der Verstelleinrichtung 5, dass bei einer Bewegung des Bedienelements 11 in Längsrichtung L stets auch die Armlehenkopplung 7, da immer im zweiten Schiebelement 1B fest angeordnet, in die gleiche Richtung und um vorzugsweise auch um den gleichen Längenbetrag mitgeführt wird.

Die Figur 2B zeigt insofern eine vergrößerte Darstellung der in der Figur 2A gezeigten Armlehnenanordnung 100.

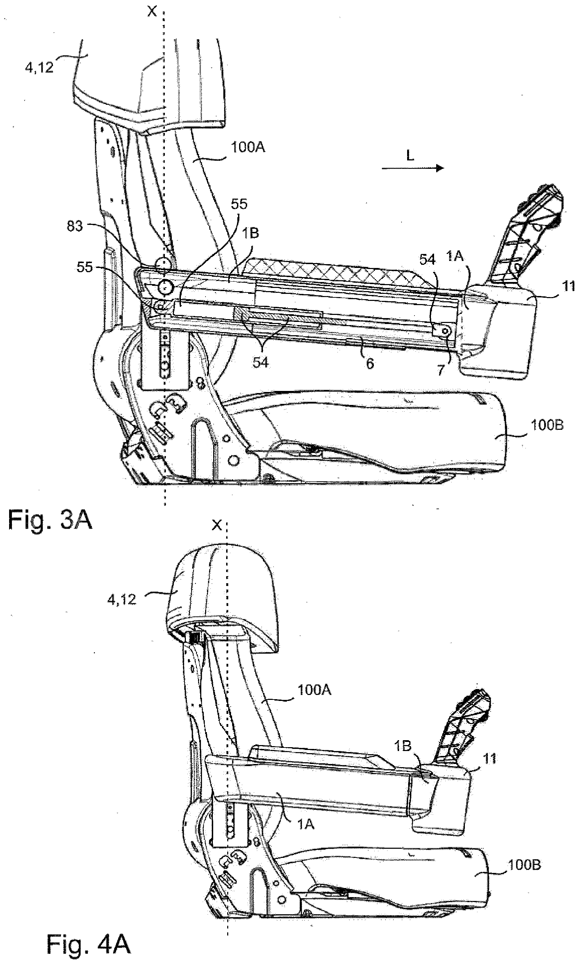

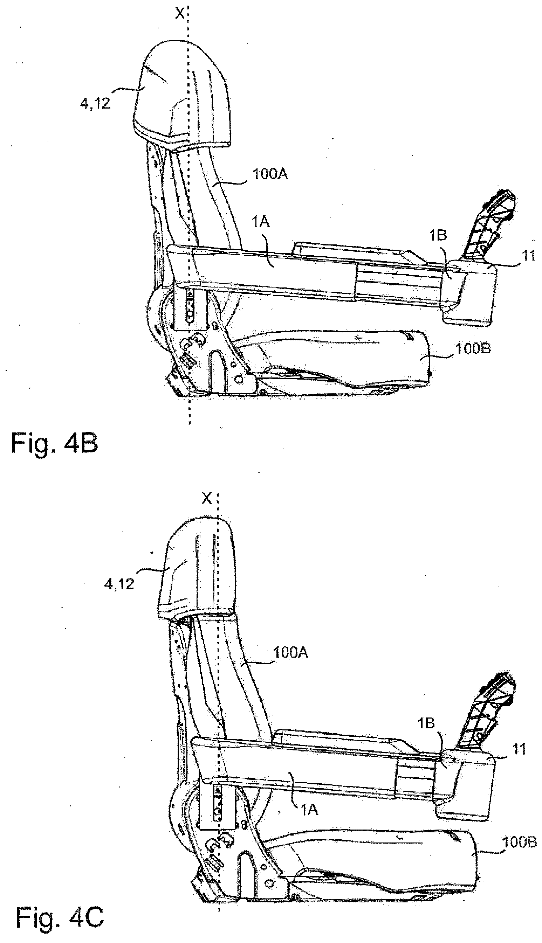

In der Figur 3A ist in der schematischen Seitenansicht ein weiteres Ausführungsbeispiel einer hier beschriebenen Armlehnenanordnung 100 offenbart, bei der in einer weiteren alternativen Ausführungsform der hier beschriebenen Verstelleinrichtung 5, diese mit einem pneumatischen Druckzylinder 55 gebildet ist, wobei in der Längsrichtung L innerhalb des Druckzylinders 55 ein Aktor 54 schiebebeweglich angeordnet ist, wobei der Druckzylinder 55 innerhalb des Gehäuses 6 der Armlehne 1 am Armlehnenträger 3 mit einem Ende befestigt ist und ein freies Ende des Aktors 54 mit einer Armlehnenkopplung 7 der Armlehne 1 verbunden ist, wobei zur Einstellung der Relativposition des Bedienelements 11 relativ zu dem Sitz- und/oder Abstützteil 4 mindestens eine steuerbare Ventileinrichtung eingebaut ist, wobei über eine Fluidzu- und/oder abfuhr der Aktor 54 aus dem Druckzylinder 55 heraus- und/oder hereinfahrbar ist. In der Figur 3A ist nämlich eine maximale Länge der Armlehne 1 gezeigt, sodass die dort gezeigte Kopfstütze 12, d. h. dass Sitz- und/oder Abstützteil 4, von der Armlehne 1 um die Schwenkachse X wegverdreht ist. Das Umgekehrte ist in der Figur 4A gezeigt, wobei die Figur 4B den Verdrehzustand gemäß der Figur 3A noch einmal in einer weiteren Seitenansicht darstellt. In der Figur 4C ist zudem die Kopfstütze 12 in einer Mittenstellung angeordnet, sodass auch die Länge der Armlehne 1 eine mittlere Längenausdehnung, d. h. eine Mittenposition einnimmt.

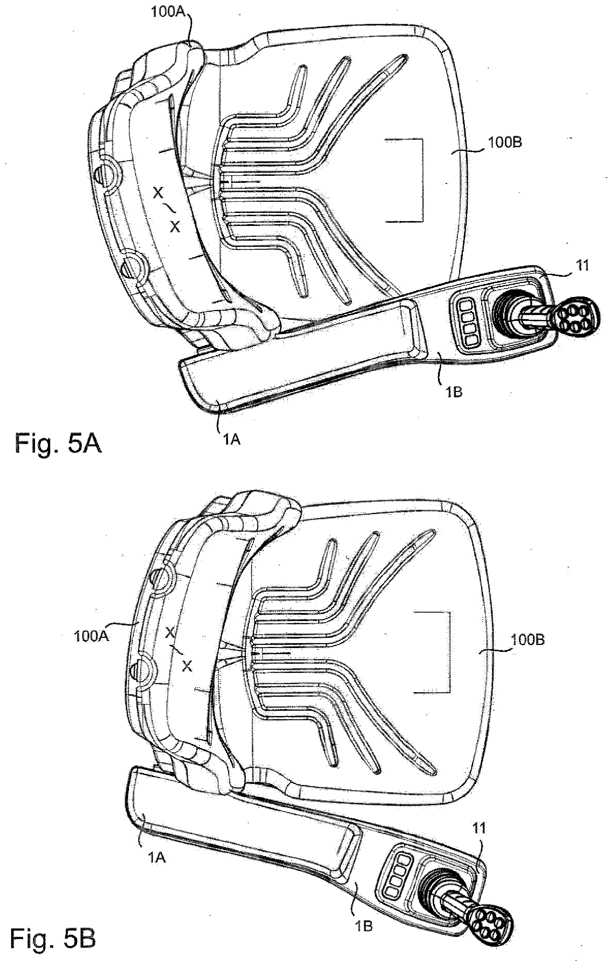

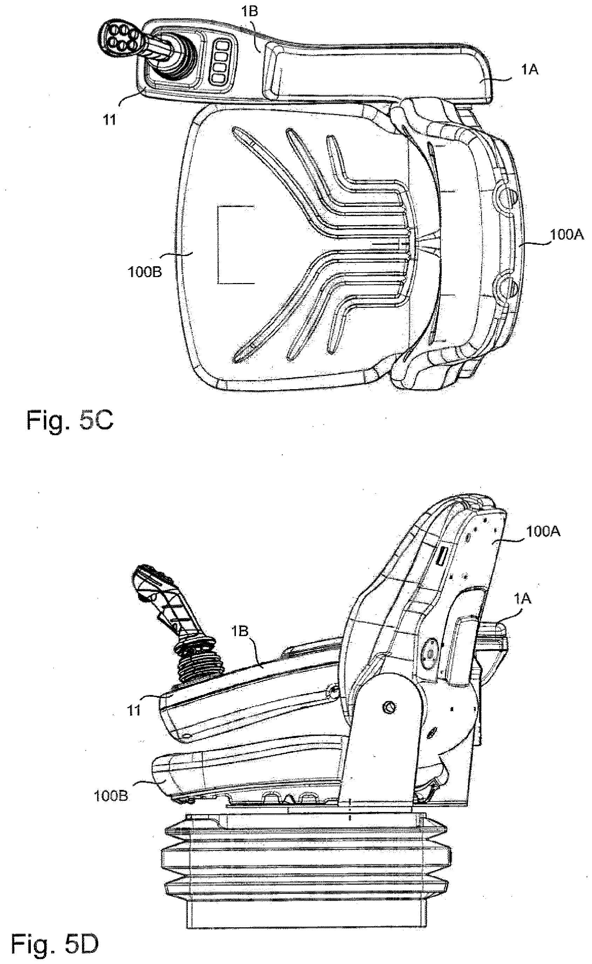

In den Figuren 5A - 5E ist ein weiteres Ausführungsbeispiel eines hiermit beschriebenen Fahrzeugsitzes 1000 gezeigt, wobei im Unterschied zu den Ausführungsbeispielen gemäß den Figuren 1A - 4C nun nicht die Kopfstütze 12 des benannten Sitz- und/oder Abstützteils 4 sind, sondern dass Sitz- und/oder Abstützteil 4 nun die Rückenlehne 100A des Fahrzeugsitzes 1000 bildet. Dabei ist erkennbar, dass die Armlehne 1 mechanisch fest über die Lagerachse 2 mit der Rückenlehne 100A um die Schwenkachse X mitverschwenkt wird. Allerdings ist zu beachten, dass in Abhängigkeit des Verschwenkungsgrades wiederum ebenso eine Länge der Armlehne 1 und daher eine Relativposition des Bedienelements 11 zu der Rückenlehne 100A vorgebbar einstellbar ist. Die verschiedenen Verschwenkpositionen sind daher in den Figuren 5A - 5C gezeigt. Den dortigen Draufsichten ist nämlich zu entnehmen, dass die Länge der Armlehne 1 abhängig ist von der Winkelstellung der Rückenlehne 100A. Bei einer Verschwenkung nach rechts, vom Benutzer aus gesehen, verkürzt sich die Länge der Armlehne 1 und umgekehrt bei einer Verschwenkung links verlängert sich die Armlehne 1 durch ein Herausziehen oder Herausschieben des zweiten Schiebeelements 1B. Mit anderen Worten ändert sich die Länge der Armlehne 1 genau entsprechend wie in den vorher gezeigten Ausführungsformen, nur mit dem Unterscheid, dass die Armlehne 1 nun mit der Rückenlehne 100A um die Schwenkachse X mitverschwenkt fest mitverschwenkt wird.

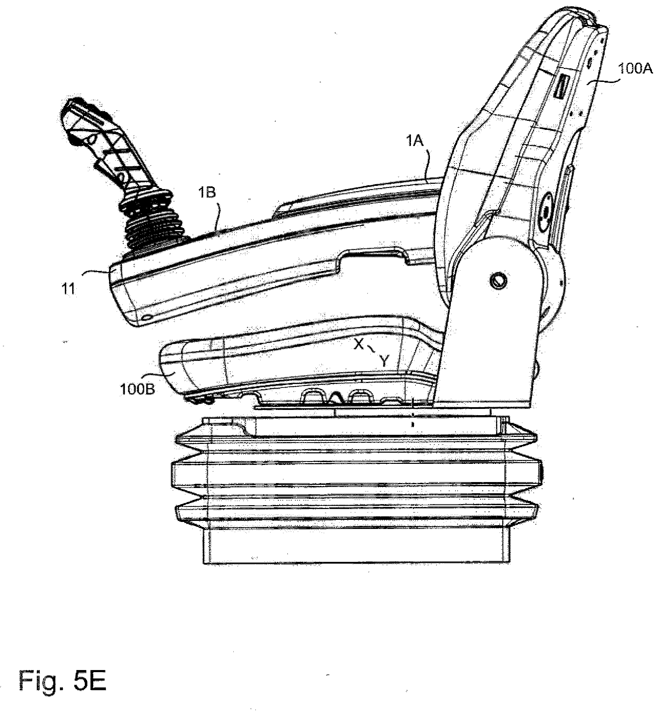

In den Figuren 5D und 5E ist zwar die Rückenlehne 100A in einer Mittenstellung gezeigt, jedoch ist nunmehr eine Sitzfläche 100B des Fahrzeugsitzes 1000 nach vorne um eine Neigeachse Y geneigt. Dies wiederum bedingt eine Verlängerung der absoluten Länge der Armlänge 1, da der Fahrer durch die Nach-Vorne-Neigung etwas nach vorne kippt und somit eine Handreichweite des Fahrers sich vergrößert. Genau das Umgekehrte kann erreicht sein, wenn sich der Sitz nach hinten um die Neigeachse Y neigt. Insofern ist in den Figuren 5D und 5E das benannte Sitz- und/oder Abstützteil 4 die Sitzfläche 100B des Fahrzeugsitzes 1000.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder in den Ausführungsbeispielen angegeben ist, solange der Gegenstand mit seinen Merkmalen dem Umfang entspricht, der durch die Ansprüche definiert ist.

### Bezugszeichenliste

- 1: Armlehne
- 1A: erstes Schiebeelement
- 1B: zweites Schiebeelement
- 2: Lagerachse
- 3: Armlehnenträger
- 4: Sitz- und/oder Abstützteil
- 5: Verstelleinrichtung
- 5A: Führungselement
- 6: Gehäuse
- 7: Armlehnenkopplung
- 8: Bowdenzugelement
- 9: Führelement
- 10: Rückstellelement
- 11: Bedienelement
- 12: Kopfstütze
- 51: Drehspindel
- 51a: erstes Ende (Drehspindel)
- 51b: zweites Ende (Drehspindel)
- 52: Spindelmotor
- 53: Antriebsmutter
- 54: Aktor
- 55: Druckzylinder
- 81: erstes Ende (Bowdenzugelement)
- 82: zweites Ende (Bowdenzugelement)
- 83: Umlenkelement
- 91: Rückstellfeder
- 100: Armlehnenanordnung
- 100A: Rückenlehne
- 100B: Sitzfläche
- 1000: Fahrzeugsitz
- L: Längsrichtung/Längsachse
- L1: Spindelachse
- X: Schwenkachse der Kopfstütze und/oder Rückenlehne
- Y: Neigeachse

## Patentansprüche

1. Armlehnenanordnung (100) für einen Sitz, insbesondere für einen Fahrzeugsitz (1000), umfassend eine Lagerachse (2), einen Armlehnenträger (3), eine Armlehne (1), die mittels der Lagerachse (2) mit dem Armlehnenträger (3) schwenkbeweglich verbunden ist, und zumindest ein Sitz- und/oder Abstützteil (4), wobei das Sitz- und/oder Abstützteil (4) und die Armlehne (1) zumindest über die Lagerachse (2) mechanisch miteinander in Wirkverbindung stehen, und das Sitz- und/oder Abstützteil (4) um zumindest eine Schwenkachse (X) schwenkbeweglich angeordnet werden kann, **gekennzeichnet, durch**
eine Verstelleinrichtung (5) zur Einstellung einer Relativposition zwischen einem Bedienelement (11) der Armlehne (1) und dem Sitz- und/oder Abstützteil (4), wobei die Verstelleinrichtung (5) zur Einstellung der Relativposition des Bedienelements (11) zumindest teilweise an der Armlehne (1) derart gelagert ist, dass das Bedienelement (11) der Armlehne (1) mit einer Verlagerungsbewegung des Sitz- und/oder Abstützteils (4) um die zumindest eine Schwenk- und/oder Neigeachse (X, Y) zumindest teilweise über eine Längenänderung der Armlehne (1) mitgeführt und/oder dass das Sitz- und/oder Abstützteil (4) mit einer Verlagerungsbewegung des Bedienelements (11) der Armlehne (1) zumindest teilweise mitgeführt wird.

2. Armlehnenanordnung (100) nach Anspruch 1,
**dadurch gekennzeichnet, dass**
die Verstelleinrichtung (5) innerhalb eines Gehäuses (6) der Armlehne (1) angeordnet ist.

3. Armlehnenanordnung (100) nach Anspruch 2, **dadurch gekennzeichnet, dass**
das Gehäuse (6) mit zumindest zwei, zumindest teilweise ineinander verschiebbaren, Schiebeelementen (1A, 1B) gebildet ist, wobei an demjenigen Schiebeelement (1B), welches, insbesondere stets, weiter weg von der Lagerachse (2) angeordnet ist, das Bedienelement (11) der Armlehne (1) angebracht ist.

4. Armlehnenanordnung (100) nach dem vorhergehenden Anspruch,
**dadurch gekennzeichnet, dass**
durch ein Hinein- oder Hinausschieben desjenigen Schiebeelements (1B), an dem das Bedienelement (1) angebracht ist, eine Länge der Armlehne (1) veränderbar ist.

5. Armlehnenanordnung (100) nach dem vorhergehenden Anspruch,
**dadurch gekennzeichnet, dass**
unabhängig oder abhängig von einer Längenänderung der Armlehne (1), die Armlehne (1) um die Lagerachse (2) stets hoch- und runterklappbar ist.

6. Armlehnenanordnung (100) nach zumindest einem der vorhergehenden Ansprüche, **dadurch gekennzeichnet, dass**
die Armlehne (1) nur innerhalb eines Teilschwenkbereichs des Sitz- und/oder Abstützteils (4) mit diesem mitverschwenkbar und/oder längenveränderbar ist, wobei sich eine Länge der Armlehne (1) bis zu einer vorgebbaren Grenzverschwenkung der Armlehne (1) und/oder des Sitz- und/oder Abstützteils (4) um die Schwenkachse (X) mitverändert, jedoch bei Überschreiten einer solchen Grenzverschwenkung an einer Maximal- und/oder Minimallänge ankommt, während das Sitz- und/oder Abstützteil (4) noch weiter verschwenkbar ist.

7. Armlehnenanordnung (100) nach dem vorhergehenden Anspruch,
**dadurch gekennzeichnet, dass**
die Grenzverschwenkung an dem Sitz- und/oder Abstützteil (4) und/oder der Armlehne (1) mittels eines mechanischen und/oder pneumatischen und/oder elektrischen Mechanismus durch die Verstelleinrichtung (5) gesteuert ist.

8. Armlehnenanordnung (100) nach einem der Ansprüche 6 oder 7,
**dadurch gekennzeichnet, dass**
die Armlehnenanordnung (100) und/oder die Verstelleinrichtung (5) eine Sensorik und/oder Steuerung umfasst, welche eine Verschwenkung des Sitz- und/oder Abstützteils (4) und/oder der Armlehne (1) erfasst und bei Erreichen der Grenzverschwenkung die Verstelleinrichtung (5) oder deren Elemente derart ansteuert, dass diese die Armlehne (1) ab diesem Grenzwert in ihrer Länge fixiert.

9. Armlehnenanordnung (100) nach zumindest einem der vorhergehenden Ansprüche, **dadurch gekennzeichnet, dass**
die Verstelleinrichtung (5) nicht nur dazu eingerichtet und dafür vorgesehen ist eine Längenänderung der Armlehne (1) durchzuführen, sondern dass über die Verstelleinrichtung (5) die gesamte Armlehne (1), insbesondere abhängig von der Verschwenkung des Sitz- und/oder Abstützteils (4), um die Lagerachse (2) des Armlehnenträgers (3) hoch- und runterklappbar ist.

10. Armlehnenanordnung (100) zumindest einem der vorhergehenden Ansprüche,
**dadurch gekennzeichnet, dass**
eine Kopplung der Bewegung des Sitz- und/oder Abstützteils (4) mit einer Armlehne (1), insbesondere des Bedienelements (11), zumindest teilweise bewegungssynchron oder aber auch teilweise oder ganz nicht-synchron ausgebildet ist, wobei für den Fall, dass die Kopplung zwischen den beiden Elementen (1, 4) nicht-synchron ausgebildet ist, das Bedienelement (11) zwar mit der Bewegung des Sitz- und/oder Abstützteils mitgeführt, das heißt hinaus- oder herausschiebbar, hoch- oder runterklappbar ist, diese Bewegung jedoch unabhängig von einem Winkelgrad der Verschwenkung des Sitz- und/oder Abstützteils (4) ist, wobei bei einer synchronen Kopplung der Elemente (1, 4) die Bewegungen abhängig voneinander gekoppelt sind.

11. Armlehnenanordnung (100) nach zumindest einem der vorhergehenden Ansprüche, **dadurch gekennzeichnet, dass**
die Verstelleinrichtung (5) mit einer Drehspindel (51) sowie mit einem an einem ersten Ende (51a) der Drehspindel (51) angeordneten Spindelmotor (52) zum motorbetätigten Drehen der Drehspindel (51) um ihre Längsachse (L) gebildet ist, wobei die Drehspindel (51) mit ihrem zweiten Ende (51b) mit einer Armlehnenkopplung (7) der Armlehne (1) verbunden ist, wobei der Spindelmotor (52) an dem Armlehnenträger (3) abgestützt ist, und wobei zur Einstellung der Relativposition des Bedienelements (11) relativ zu dem Sitz- und/oder Abstützteil (4), die Drehspindel (51), insbesondere über eine Drehbewegung des Spindelmotors (52) um eine Spindelachse (L1), gegen die Armlehnenkopplung (7) und/oder den Armlehnenträger (3) bewegbar ist.

12. Armlehnenanordnung (100) nach dem vorhergehenden Anspruch,
**dadurch gekennzeichnet, dass**
das erste Ende (51a) der Drehspindel (51) in einer Antriebsmutter (53) zum Antreiben der Drehspindel (51) in der Längsrichtung (L) gelagert ist, wobei die Antriebsmutter (53) rotatorisch von dem Spindelmotor (52) angetrieben wird, oder die Antriebsmutter (53) ortsfest ist und darin die Drehspindel (51) von dem Spindelmotor (52) um die Spindelachse (L1) gedreht wird.

13. Armlehnenanordnung (100) nach zumindest einem der vorhergehenden Ansprüche, **dadurch gekennzeichnet, dass**
die Verstelleinrichtung (5) mit zumindest einem, insbesondere pneumatischen, Druckzylinder (55) sowie mit einem in Längsrichtung (L) innerhalb des Druckzylinders (55) beweglichen Aktors (54) gebildet ist, wobei der Druckzylinder (55) innerhalb des Gehäuses (6) der Armlehne (1) am Armlehnenträger (3) befestigt ist, und ein freies Ende des Aktors (54) mit einer Armlehnenkopplung (7) der Armlehne (1) verbunden ist, wobei zur Einstellung der Relativposition des Bedienelements (11) relativ zu dem Sitz- und/oder Abstützteil (4) mittels einer steuerbaren Ventileinrichtung und über eine Fluidzu- und/oder Abfuhr im Druckzylinder (55) der Aktor (54) aus dem Druckzylinder (55) heraus- und/oder hereinfahrbar ist.

14. Armlehnenanordnung (100) nach zumindest einem der vorhergehenden Ansprüche, **dadurch gekennzeichnet, dass**
die Verstelleinrichtung (5) mit zumindest einem Bowdenzugelement (8) gebildet ist, wobei ein erstes Ende (81) des Bowdenzugelements (8) mit einer Armlehnenkopplung (7) und ein zweites Ende (82) des Bowdenzugelements (8) mit einem an dem Armlehnenträger (3) abgestützten Führelement (9) mechanisch verbunden ist, wobei zur Einstellung der Relativposition des Bedienelements (11) der Armlehne (1) relativ zu dem Sitz- und/oder Abstützteil (4) das Bowdenzugelement (8) durch Zug- und/oder Druckbeaufschlagung bewegbar ist.

15. Fahrzeugsitz (1000),
**dadurch gekennzeichnet, dass**
dieser zumindest eine Armlehnenanordnung (100) gemäß zumindest einer der vorherigen Ansprüche 1 bis 14 aufweist.

## Claims

1. Armrest assembly (100) for a seat, in particular for a vehicle seat (1000), comprising a bearing axis (2), an armrest carrier (3), an armrest (1) that is pivotably connected to the armrest carrier (3) by means of the bearing axis (2), and at least one seat and/or support part (4), the seat and/or support part (4) and the armrest (1) being mechanically operatively interconnected at least by means of the bearing axis (2), and it being possible for the seat and/or support part (4) to be arranged so as to be pivotable about at least one pivot axis (X), **characterised by**
an adjustment means (5) for setting a relative position between an operating element (11) of the armrest (1) and the seat and/or support part (4), the adjustment means (5) for setting the relative position of the of the operating element (11) being arranged on the armrest (1) at least in part such that the operating element (11) of the armrest (1) is moved together with a displacement movement of the seat and/or support part (4) about the at least one pivot and/or inclination axis (X, Y), at least in part, by means of a length change in the armrest (1), and/or such that the seat and/or support part (4) is moved together with a displacement movement of the operating element (11) of the armrest (1) at least in part.

2. Armrest assembly (100) according to claim 1,
**characterised in that**
the adjustment means (5) is arranged inside a housing (6) of the armrest (1).

3. Armrest assembly (100) according to claim 2,
**characterised in that**
the housing (6) is formed comprising at least two slide elements (1A, 1B) that can be slid into one another at least in part, the operating element (11) of the armrest (1) being attached to the slide element (1B) that is, in particular always, further away from the bearing axis (2).

4. Armrest assembly (100) according to the preceding claim,
**characterised in that**
a length of the armrest (1) can be changed by means of sliding in or out the slide element (1B) to which the operating element (1) is attached.

5. Armrest assembly (100) according to the preceding claim,
**characterised in that**
the armrest (1) can always be folded up and down about the bearing axis (2), irrespective of or depending on the length change of the armrest (1).

6. Armrest assembly (100) according to at least one of the preceding claims,
**characterised in that**
the armrest (1) is pivotable together with the seat and/or support part (4) and/or is length-adjustable only within a partial pivoting range of said seat and/or support part, a length of the armrest (1) also changing up to a specifiable threshold pivoting of the armrest (1) and/or of the seat and/or support part (4) about the pivot axis (X), but reaching a maximum and/or minimum length when threshold pivoting of this kind is exceeded, while the seat and/or support part (4) can still be pivoted further.

7. Armrest assembly (100) according to the preceding claim,
**characterised in that**
the threshold pivoting at the seat and/or support part (4) and/or the armrest (1) is controlled by the adjustment means (5) using a mechanical and/or pneumatic and/or electrical mechanism.

8. Armrest assembly (100) according to either claim 6 or claim 7,
**characterised in that**
the armrest assembly (100) and/or the adjustment means (5) comprises a sensor system and/or controller which detects pivoting of the seat and/or support part (4) and/or of the armrest (1) and, when the threshold pivoting is reached, actuates the adjustment means (5) or the elements thereof such that said adjustment means fixes the length of the armrest (1) after said threshold value.

9. Armrest assembly (100) according to at least one of the preceding claims, **characterised in that**
the adjustment means (5) is designed and intended not only for carrying out a length change of the armrest (1), but **in that** the entire armrest (1) can be folded up and down about the bearing axis (2) of the armrest carrier (3), by the adjustment means (5), in particular depending on the pivoting of the seat and/or support part (4).

10. Armrest assembly (100) according to at least one of the preceding claims,
**characterised in that**
a coupling of the movement of the seat and/or support part (4) to an armrest (1), in particular the movement of the operating element (11), is synchronous in movement at least in part, or is non-synchronous in part or entirely, in the event of the coupling between the two elements (1, 4) being non-synchronous, the operating element (11) being moved together with the movement of the seat and/or support part, i.e. being able to be slid in or out and folded up or down, but said movement being independent of an angular degree of the pivoting of the seat and/or support part (4), the movements being mutually independently coupled in the case of synchronous coupling of the elements (1, 4).

11. Armrest assembly (100) according to at least one of the preceding claims,
**characterised in that**
the adjustment means (5) is formed comprising a fulcrum shaft (51) and comprising a spindle motor (52) that is arranged at a first end (51a) of the fulcrum shaft (51) and is intended for rotating the fulcrum shaft (51) about the longitudinal axis (L) thereof in a motor-actuated manner, the second end (51b) of the fulcrum shaft (51) being connected to an armrest coupling (7) of the armrest (1), the spindle motor (52) being supported on the armrest carrier (3), and the fulcrum shaft (51) being movable counter to the armrest coupling (7) and/or to the armrest carrier (3), in particular by means of a rotational movement of the spindle motor (52) about a spindle axis (L1), in order to set the relative position of the operating element (11) relative to the seat and/or support part (4).

12. Armrest assembly (100) according to the preceding claim,
**characterised in that**
the first end (51a) of the fulcrum shaft (51) is mounted in a drive nut (53) for driving the fulcrum shaft (51) in the longitudinal direction (L), the drive nut (53) being rotatably driven by the spindle motor (52), or the drive nut (53) being stationary and the fulcrum shaft (51) being rotated therein, about the spindle axis (L1), by means of the spindle motor (52).

13. Armrest assembly (100) according to at least one of the preceding claims,
**characterised in that**
the adjustment means (5) is formed comprising at least one, in particular pneumatic, pressure cylinder (55) and comprising an actuator (54) that is movable inside the pressure cylinder (55), in the longitudinal direction (L), the pressure cylinder (55) being fastened to the armrest carrier (3) inside the housing (6) of the armrest (1), and a free end of the actuator (54) being connected to an armrest coupling (7) of the armrest (1), the actuator (54) being able to be moved into and/or out of the pressure cylinder (55) by means of a controllable valve means and by means of a supply and/or removal of fluid in the pressure cylinder (55), in order to set the relative position of the operating element (11) relative to the seat and/ support part (4).

14. Armrest assembly (100) according to at least one of the preceding claims,
**characterised in that**
the adjustment means (5) is formed comprising at least one Bowden cable element (8), a first end (81) of the Bowden cable element (8) being mechanically connected to an armrest coupling (7) and a second end (82) of the Bowden cable element (8) being mechanically connected to a guide element (9) supported on the armrest carrier (3), the Bowden cable element (8) being movable by means of an application of tension and/or pressure in order to set the relative position of the operating element (11) of the armrest (1) relative to the seat and/or support part (4).

15. Vehicle seat (1000),
**characterised in that**
said seat comprises at least one armrest assembly (100) according to at least one of the preceding claims 1 to 14.

## Revendications

1. Dispositif d'accoudoir (100) pour un siège, en particulier pour un siège de véhicule (1000), comportant un axe de palier (2), un support d'accoudoir (3), un accoudoir (1), qui est relié de manière pivotante au support d'accoudoir (3) au moyen de l'axe de palier (2), et au moins une partie siège et/ou d'appui (4), dans lequel la partie siège et/ou d'appui (4) et l'accoudoir (1) sont en liaison fonctionnelle l'une avec l'autre mécaniquement au moins par l'axe de palier (2), et la partie siège et/ou d'appui (4) peut être disposée de manière pivotante autour d'au moins un axe de pivotement (X), **caractérisé par**
un dispositif de réglage (5) pour le réglage d'une position relative entre un élément de commande (11) de l'accoudoir (1) et la partie siège et/ou d'appui (4), le dispositif de réglage (5) pour le réglage de la position relative de l'élément de commande (11) étant monté au moins partiellement sur l'accoudoir (1) de telle sorte que l'élément de commande (11) de l'accoudoir (1) est emmené au moins partiellement avec une variation de longueur de l'accoudoir (1) par un mouvement de déplacement de la partie siège et/ou d'appui (4) autour dudit au moins un axe de pivotement et/ou d'inclinaison (X, Y) et/ou de telle sorte que la partie siège et/ou d'appui (4) est emmenée au moins partiellement par un mouvement de déplacement de l'élément de commande (11) de l'accoudoir (1).

2. Dispositif d'accoudoir (100) selon la revendication 1,
**caractérisé par le fait que**
le dispositif de réglage (5) est disposé à l'intérieur d'un boîtier (6) de l'accoudoir (1).

3. Dispositif d'accoudoir (100) selon la revendication 2,
**caractérisé par le fait que**
le boîtier (6) est formé par au moins deux éléments coulissants (1A, 1B), au moins partiellement déplaçables l'un dans l'autre, l'élément de commande (11) de l'accoudoir (1) étant monté sur l'élément coulissant (1B) qui est disposé, en particulier toujours, plus loin de l'axe de palier (2).

4. Dispositif d'accoudoir (100) selon la revendication précédente,
**caractérisé par le fait que**
une longueur de l'accoudoir (1) est modifiable par une poussée vers l'intérieur ou vers l'extérieur de l'élément coulissant (1B) sur lequel l'élément de commande (11) est monté.

5. Dispositif d'accoudoir (100) selon la revendication précédente,
**caractérisé par le fait que**
indépendamment de ou en fonction d'une variation de longueur de l'accoudoir (1), l'accoudoir (1) est toujours apte à être relevé ou rabattu autour de l'axe de palier (2).

6. Dispositif d'accoudoir (100) selon au moins l'une des revendications précédentes, **caractérisé par le fait que**
l'accoudoir (1) est, seulement à l'intérieur d'une région de pivotement partiel de la partie siège et/ou d'appui (4), apte à pivoter avec celle-ci et/ou apte à être modifiée en longueur, une longueur de l'accoudoir (1) changeant jusqu'à un pivotement limite prédéterminable de l'accoudoir (1) et/ou de la partie siège et/ou d'appui (4) autour de l'axe de pivotement (X), mais parvenant à une longueur maximale et/ou minimale lors d'un dépassement d'un tel pivotement limite, alors que la partie siège et/ou d'appui (4) est apte à pivoter encore plus loin.

7. Dispositif d'accoudoir (100) selon la revendication précédente,
**caractérisé par le fait que**
le pivotement limite sur la partie siège et/ou d'appui (4) et/ou l'accoudoir (1) est commandé par le dispositif de réglage (5) au moyen d'un mécanisme mécanique et/ou pneumatique et/ou électrique.

8. Dispositif d'accoudoir (100) selon l'une des revendications 6 ou 7,
**caractérisé par le fait que**
le dispositif d'accoudoir (100) et/ou le dispositif de réglage (5) comporte un système de capteurs et/ou une commande, qui détecte un pivotement de la partie siège et/ou d'appui (4) et/ou de l'accoudoir (1) et commande le dispositif de réglage (5) ou ses éléments lorsque le pivotement limite est atteint, de telle sorte que celui-ci fixe l'accoudoir (1) dans sa longueur à partir de cette valeur limite.

9. Dispositif d'accoudoir (100) selon au moins l'une des revendications précédentes, **caractérisé par le fait que**
le dispositif de réglage (5) est non seulement conçu et prévu pour effectuer une variation de longueur de l'accoudoir (1), mais encore que, par le dispositif de réglage (5), l'accoudoir entier (1), en particulier en fonction du pivotement de la partie siège et/ou d'appui (4), est apte à être relevé et rabattu autour de l'axe de palier (2) du support d'accoudoir (3).

10. Dispositif d'accoudoir (100) selon au moins l'une des revendications précédentes, **caractérisé par le fait que**
un couplage du mouvement de la partie siège et/ou d'appui (4) avec un accoudoir (1), en particulier de l'élément de commande (11), est réalisé au moins partiellement de manière à se déplacer en synchronisme, voire également partiellement ou totalement de façon non synchrone, où, dans le cas où le couplage est réalisé entre les deux éléments (1, 4) de façon non synchrone, l'élément de commande (11) est certes emmené par le mouvement de la partie siège et/ou d'appui, à savoir est apte à être poussé vers l'intérieur ou vers l'extérieur, à être relevé ou rabattu, mais ce mouvement est indépendant d'un degré d'angle du pivotement de la partie siège et/ou d'appui (4), où, lors un couplage synchrone des éléments (1, 4), les déplacements sont couplés en fonction l'un de l'autre.

11. Dispositif d'accoudoir (100) selon au moins l'une des revendications précédentes, **caractérisé par le fait que**
le dispositif de réglage (5) est formé avec une broche rotative (51) ainsi qu'avec un moteur de broche (52) disposé sur une première extrémité (51a) de la broche rotative (51) pour la rotation à commande motorisée de la broche rotative (51) autour de son axe longitudinal (L), la broche rotative (51) étant reliée par sa seconde extrémité (51b) à un couplage d'accoudoir (7) de l'accoudoir (1), le moteur de broche (52) étant supporté sur le support d'accoudoir (3), et, pour le réglage de la position relative de l'élément de commande (11) par rapport à la partie siège et/ou d'appui (4), la broche rotative (51), en particulier avec un mouvement de rotation du moteur de broche (52) autour d'un axe de broche (L1), étant déplaçable à l'encontre du couplage d'accoudoir (7) et/ou du support d'accoudoir (3).

12. Dispositif d'accoudoir (100) selon la revendication précédente,
**caractérisé par le fait que**
la première extrémité (51a) de la broche rotative (51) est montée dans un écrou d'entraînement (53) pour l'entraînement de la broche rotative (51) dans la direction longitudinale (L), l'écrou d'entraînement (53) étant entraîné en rotation par le moteur de broche (52), ou l'écrou d'entraînement (53) étant fixe et la broche rotative (51) y étant entraînée en rotation par le moteur de broche (52) autour de l'axe de broche (L1).

13. Dispositif d'accoudoir (100) selon au moins l'une des revendications précédentes, **caractérisé par le fait que**
le dispositif de réglage (5) est formé avec au moins un cylindre imprimeur (55), en particulier pneumatique, ainsi qu'avec un actionneur (54) mobile à l'intérieur du cylindre imprimeur (55) dans la direction longitudinale (L), le cylindre imprimeur (55) étant fixé à l'intérieur du boîtier (6) de l'accoudoir (1) sur le support d'accoudoir (3), et une extrémité libre de l'actionneur (54) étant reliée à un couplage d'accoudoir (7) de l'accoudoir (1), où, pour le réglage de la position relative de l'élément de commande (11) par rapport à la partie siège et/ou d'appui (4) au moyen d'un dispositif de soupape commandable et avec une amenée de fluide et/ou d'une évacuation de fluide dans le cylindre imprimeur (55), l'actionneur (54) est apte à être sorti du cylindre imprimeur (55) et/ou rentré.

14. Dispositif d'accoudoir (100) selon au moins l'une des revendications précédentes, **caractérisé par le fait que**
le dispositif de réglage (5) est formé avec au moins un élément de câble Bowden (8), une première extrémité (81) de l'élément de câble Bowden (8) étant reliée mécaniquement à un couplage d'accoudoir (7) et une seconde extrémité (82) de l'élément de câble Bowden (8) étant reliée mécaniquement à un élément de guidage (9) supporté sur le support d'accoudoir (3), où, pour le réglage de la position relative de l'élément de commande (11) de l'accoudoir (1) par rapport à la partie siège et/ou d'appui (4), l'élément de câble Bowden (8) est déplaçable par sollicitation de traction et/ou de pression.

15. Siège de véhicule (1000),
**caractérisé par le fait que**
celui-ci présente au moins un dispositif d'accoudoir (100) selon au moins l'une des revendications précédentes 1 à 14.
